(19) Europäisches Patentamt / European Patent Office / Office européen des brevets

(11) **EP 2 553 254 B1**

(12) **FASCICULE DE BREVET EUROPEEN**

(45) Date de publication et mention
de la délivrance du brevet:
**12.04.2017 Bulletin 2017/15**

(21) Numéro de dépôt: **11705928.7**

(22) Date de dépôt: **26.01.2011**

(51) Int Cl.:
***F02N 11/08*** *(2006.01)*

(86) Numéro de dépôt international:
**PCT/FR2011/050144**

(87) Numéro de publication internationale:
**WO 2011/121195 (06.10.2011 Gazette 2011/40)**

(54) **PROCEDE DE CONTROLE DE LA FONCTION DE REDEMARRAGE D'UN SYSTEME DE DEMARRAGE/ARRET AUTOMATIQUE D'UN MOTEUR THERMIQUE D'UN VEHICULE, ET SYSTEME CORRESPONDANT**

VERFAHREN ZUR STEUERUNG DER NEUSTARTFUNKTION EINES AUTOMATISCHEN START/STOPPSYSTEMS DES VERBRENNUNGSMOTORS EINES FAHRZEUGES UND ENTSPRECHENDES SYSTEM

METHOD OF CONTROLLING THE FUNCTION OF RESTARTING AN AUTOMATIC START/STOP SYSTEM FOR A VEHICLE COMBUSTION ENGINE, AND CORRESPONDING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.03.2010 FR 1052323**

(43) Date de publication de la demande:
**06.02.2013 Bulletin 2013/06**

(73) Titulaire: **Valeo Equipements Electriques Moteur 94046 Créteil Cedex (FR)**

(72) Inventeur: **GRANZIERA, Cyril F-75015 Paris (FR)**

(56) Documents cités:
**EP-A2- 1 589 632      WO-A1-93/12568
DE-A1- 10 347 683      DE-A1-102007 030 297
FR-A1- 2 839 119       GB-A- 2 120 877**

EP 2 553 254 B1

**Description**

**DOMAINE TECHNIQUE DE L'INVENTION.**

La présente invention concerne un procédé de contrôle de la fonction de redémarrage d'un système de démarrage/ arrêt automatique d'un moteur thermique d'un véhicule.
L'invention concerne aussi ce même système, ainsi qu'une mémoire électronique de ce système contenant le programme adapté.

**ARRIERE PLAN TECHNOLOGIQUE DE L'INVENTION.**

Des considérations d'économie d'énergie et de réduction de la pollution, surtout en milieu urbain, conduisent les constructeurs de véhicules automobiles à équiper leurs modèles d'un système de démarrage/ arrêt automatique, tel que le système connu sous le terme anglo-saxon de « Stop and Go ».
Ainsi que le rappelle la société VALEO EQUIPEMENTS ELECTRIQUES MOTEUR dans la demande de brevet FR2875549, les véhicules sont rendus aptes à fonctionner selon le mode « Stop and Go » grâce à une machine électrique réversible, ou alterno-démarreur, couplé au moteur thermique.
L'utilisation d'un alterno-démarreur dans un mode de fonctionnement « Stop and Go » consiste, sous certaines conditions, à provoquer l'arrêt complet du moteur thermique lorsque le véhicule est lui-même à l'arrêt, puis à redémarrer le moteur thermique à la suite, par exemple, d'une action du conducteur interprétée comme une demande de redémarrage.
Une situation typique de « Stop and Go » est celle de l'arrêt à un feu rouge. Lorsque le véhicule s'arrête au feu, le moteur thermique est automatiquement stoppé, puis, quand le feu devient vert, le moteur est redémarré au moyen de l'alterno-démarreur, comme suite à la détection par le système de l'enfoncement de la pédale d'embrayage par le conducteur, ou de toute autre action traduisant la volonté du conducteur de redémarrer son véhicule.
Pour ce faire, ainsi que l'indique également la société VALEO EQUIPEMENTS ELECTRIQUES MOTEUR dans la demande de brevet FR2875551, le système « Stop and Go » utilise des informations représentatives de l'état de fonctionnement du véhicule, informations provenant de capteurs du véhicule, tels que les capteurs de température de l'habitacle ou de détection de la position de la pédale d'embrayage, ou les informations lues sur un bus de communication de données, comme la vitesse du véhicule ou la vitesse de rotation du moteur.
Toutefois une succession de redémarrages peut conduire à une surchauffe de l'alterno-démarreur au-delà des limites thermiques du stator ou de l'électronique de puissance.
Il est donc nécessaire de protéger l'alterno-démarreur en prévoyant son élévation de température en fonction des circonstances de son utilisation, et en inhibant la fonction de redémarrage automatique avant d'atteindre ces limites thermiques.
Le problème du contrôle de l'élévation de température d'un moteur électrique soumis à une succession de démarrages et d'arrêts n'est pas nouveau.
La demande de brevet anglais GB2120877 divulgue un circuit RC alimenté en parallèle sur le moteur qui est utilisé pour créer une image thermique du moteur électrique, et obtenir ainsi une évaluation de la température de fonctionnement.
Quand la tension aux bornes de la capacité dépasse un certain seuil, l'alimentation du moteur est coupée.
Le brevet européen EP0572588 divulgue également un procédé et un dispositif reposant sur le principe de la création d'une image thermique pour contrôler le courant d'excitation d'un alternateur et éviter une surchauffe. Le dispositif décrit utilise les caractéristiques spécifiques du générateur et/ ou les caractéristiques du régulateur de tension et/ ou les caractéristiques du véhicule et/ ou les caractéristiques du montage, par exemple le couplage thermique rotor/ stator, mises en mémoire, et prend en compte notamment la température du régulateur et la vitesse de rotation du générateur pour calculer la température en des endroits prédéterminés du dispositif.
Les enseignements généraux de ces deux derniers documents sont repris dans la demande de brevet allemand DE10347683 concernant l'inhibition de la fonction de redémarrage d'un système « Stop and Go » quand la température estimée de l'électronique de puissance dépasse un certain seuil. Un ou des capteurs de température au niveau des transistors de commutation sont utilisés, mais, pour réduire les coûts, des capteurs existants, tels que celui de mesure de la température ambiante ou celui de mesure de la température d'eau, sont alternativement utilisés pour calculer la température des éléments semiconducteurs au moyen d'une routine de calcul exécutée périodiquement dans l'unité de contrôle électronique et basée sur un modèle de rayonnement thermique de ces éléments stocké en mémoire.
L'homme de métier observera que le procédé consistant à estimer la température du module électronique de puissance à partir de mesures de la température ambiante ou de la température du liquide de refroidissement, s'il conduit bien à une réduction des coûts en utilisant des capteurs existants sur les véhicules, est certainement très imprécis, et risque, soit de rendre la protection inefficace, si l'estimation est trop basse, soit de rendre le système « Stop and Go » indisponible trop souvent, si l'estimation est trop haute.

## DESCRIPTION GENERALE DE L'INVENTION.

La présente invention vise donc à améliorer simultanément la protection thermique et la disponibilité d'un système de « Stop and Go » connu de l'état de la technique, sans accroissement significatif des coûts de fabrication.

Selon un premier aspect, l'invention concerne un procédé de contrôle de la fonction de redémarrage d'un système de démarrage / arrêt automatique d'un moteur thermique d'un véhicule au moyen d'un alterno-démarreur comprenant un module électronique de puissance et des moyens de commande, les moyens de commande incluant un module de commande commandant le module électronique de puissance et une unité de contrôle électronique, le module de commande échangeant des informations représentatives d'un état de fonctionnement du véhicule provenant de capteurs avec l'unité de contrôle électronique, le procédé étant du type de ceux dans lesquels les moyens de commande effectuent une première estimation d'une première température courante du module électronique de puissance au moyen des capteurs et déterminent l'inhibition de la fonction de redémarrage quand la première estimation de la première température courante est supérieure à une première température prédéterminée.

Conformément à l'invention, les moyens de commande effectuent la première estimation de la première température courante à partir au moins d'une mesure d'une température réelle du module de commande et d'une valeur d'une vitesse de rotation de l'alterno-démarreur quand l'alterno-démarreur fonctionne en démarreur.

Selon l'invention, lesdits moyens de commande déterminent de plus avantageusement l'inhibition de la fonction de redémarrage quand une seconde température courante d'un stator de l'alterno-démarreur est supérieure à une seconde température prédéterminée.

De préférence, les moyens de commande effectuent une seconde estimation de cette seconde température courante à partir au moins de la mesure de la température réelle du module de commande quand l'alterno-démarreur fonctionne en alternateur.

Selon l'invention, les moyens de commande effectuent les première et seconde estimations des températures à partir de plus d'au moins une table de paramètres représentatifs des caractéristiques thermiques de l'alterno-démareur.

Ces paramètres comprennent avantageusement des constantes correspondant à des conditions d'un échauffement maximum.

L'invention concerne également un système de démarrage/ arrêt automatique d'un moteur thermique d'un véhicule mettant en oeuvre le procédé spécifié ci-dessus, et dont les coûts de fabrication sont peu différents des systèmes de la génération antérieure.

Le nouveau système de démarrage/ arrêt automatique d'un moteur thermique d'un véhicule selon l'invention est remarquable en ce que le module de commande comprend des moyens pour estimer la première estimation de la première température courante à partir d'une mesure de température fournie par un capteur de température compris dans le module de commande et d'une valeur d'une vitesse de rotation de l'alterno-démarreur quand l'alterno-démarreur fonctionne en démarreur, et des moyens de transmission de la mesure de la température réelle à l'unité de contrôle électronique.

De préférence, le module de commande est agencé sur une grille de connexion du module électronique de puissance et la grille de connexion est solidaire du stator de l'alterno-démarreur.

Fort avantageusement, les moyens de commande comprennent au moins une mémoire électronique contenant les tables de paramètres représentatifs des caractéristiques thermiques de l'alterno-démareur.

Bien entendu, l'invention porte également sur une mémoire électronique, comprise dans le système de démarrage/ arrêt automatique d'un moteur thermique d'un véhicule selon l'invention, qui contient au moins un programme mettant en oeuvre à travers les moyens de commande le procédé décrit ci-dessus.

On notera que les différentes opérations décrites brièvement ci-dessus comme étant réalisées par les moyens de commande et relatives à la mise en oeuvre du procédé selon l'invention pourront en fait être réalisées par le module de commande ou l'unité de contrôle électronique inclus dans lesdits moyens de commande, selon les applications de l'invention.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

## BREVE DESCRIPTION DES DESSINS.

La **Figure 1** est un schéma de principe d'un alterno-démarreur d'un système de démarrage/ arrêt automatique d'un moteur thermique d'un véhicule selon l'invention.

La **Figure 2** est une vue schématique du module de puissance, du module de commande et de la grille de connexion d'un alterno-démarreur d'un système de démarrage/ arrêt automatique d'un moteur thermique d'un véhicule selon l'invention.

Les **Figures 3a et 3b** sont des diagrammes de temps montrant respectivement l'évolution des températures réelles et estimées de la grille de connexion et du stator et d'un alterno-démarreur d'un système de démarrage/ arrêt automatique d'un moteur thermique d'un véhicule selon l'invention.

La **Figure 4** est un diagramme montrant le calcul de la première estimation de la première température courante du module électronique de puissance d'un alterno-démarreur d'un système de démarrage/ arrêt automatique d'un moteur thermique d'un véhicule selon l'invention.

La **Figure 5** est un diagramme montrant le calcul de la seconde estimation de la seconde température courante du stator d'un alterno-démarreur d'un système de démarrage/ arrêt automatique d'un moteur thermique d'un véhicule selon l'invention.

## DESCRIPTION DES MODES DE REALISATION PREFERES DE L'INVENTION.

Un alterno-démarreur est généralement une machine électrique tournante polyphasée alimentée à partir du réseau électrique de bord B+, quand elle fonctionne en démarreur, ou fournissant de l'énergie électrique à ce réseau quand elle fonctionne en alternateur.

Un module électronique de puissance 1, 3 composé d'un circuit de commande du courant d'excitation 1 du rotor 2 et d'un convertisseur AC/DC réversible 3 connecté au stator 4 permet de réaliser ces deux modes de fonctionnement.

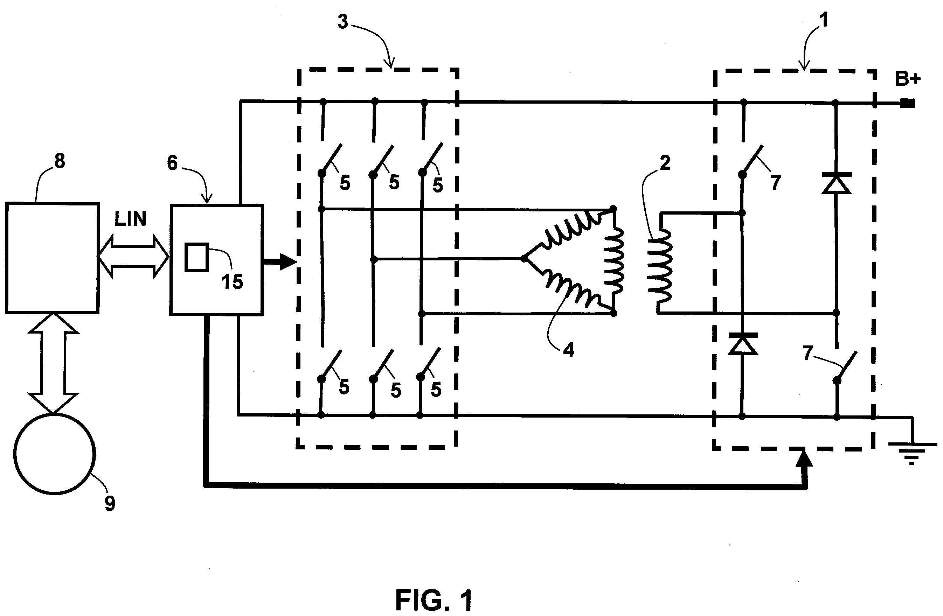

Comme le représente schématiquement la **Figure 1,** le convertisseur AC/DC réversible 3 comporte des premiers éléments de commutation à semi-conducteur 5, le plus souvent des transistors de puissance de technologie MOS, organisés en pont. Ces premiers éléments de commutation 5 sont pilotés par un module commande 6 de manière à ce que le convertisseur 3 fonctionne comme un redresseur synchrone en mode « alternateur » de l'alterno-démarreur, et fonctionne en générateur polyphasé créant dans les enroulements du stator 4 un champ tournant en mode « démarreur ».

Le module de commande 6 contrôle également le courant d'excitation du rotor 2 en pilotant par des impulsions de rapport cyclique variable des seconds éléments de commutation à semi-conducteur 7, le plus souvent également des transistors de puissance de technologie MOS.

Le module de commande 6 reçoit d'une unité de contrôle électronique 8 des informations concernant le fonctionnement du véhicule via un bus local d'interconnexion LIN. Le module de commande 6 envoie également des informations concernant les données internes de l'alterno-démarreur à l'unité de contrôle 8.

L'unité de contrôle électronique 8 traite des informations transmises par divers capteurs 9, comme la température ambiante ; elle assure le contrôle du fonctionnement du moteur thermique ; elle synthétise et transmet vers le conducteur du véhicule des informations sur l'état de l'alterno-démarreur reçues du module de commande 6 via le bus LIN.

En cas de risque de surchauffe de l'alterno-démarreur, et, par précaution, d'inhibition imminente de la fonction de démarrage, l'unité de contrôle électronique 8 doit inhiber également la fonction « Stop and Go » et le contrôle moteur doit empêcher l'arrêt du moteur thermique, dont le redémarrage sera impossible.

Afin de déterminer précisément l'évolution de la température de l'alterno-démarreur, une première mesure de la température courante de l'électronique de puissance 1, 3 et une seconde mesure de la température courante du stator 4 seraient idéalement nécessaires.

Mais les procédés de fabrication actuels conduisent à des systèmes de démarrage/ arrêt automatique où ces première et seconde mesures de température courante ne sont pas disponibles directement. L'agencement de capteurs spécifiques au niveau du module électronique de puissance 1, 3 et du stator 4 engendrerait des surcoûts excessifs et n'est pas envisageable.

L'invention consiste donc à faire une première estimation d'une première température courante Th_Leadframe du module électronique de puissance 1, 3 et une seconde estimation d'une seconde température courante Th_Stator du stator 4 à partir d'une mesure de température réelle TChip du module de commande 6 au moyen d'un agencement beaucoup plus facilement réalisable en production.

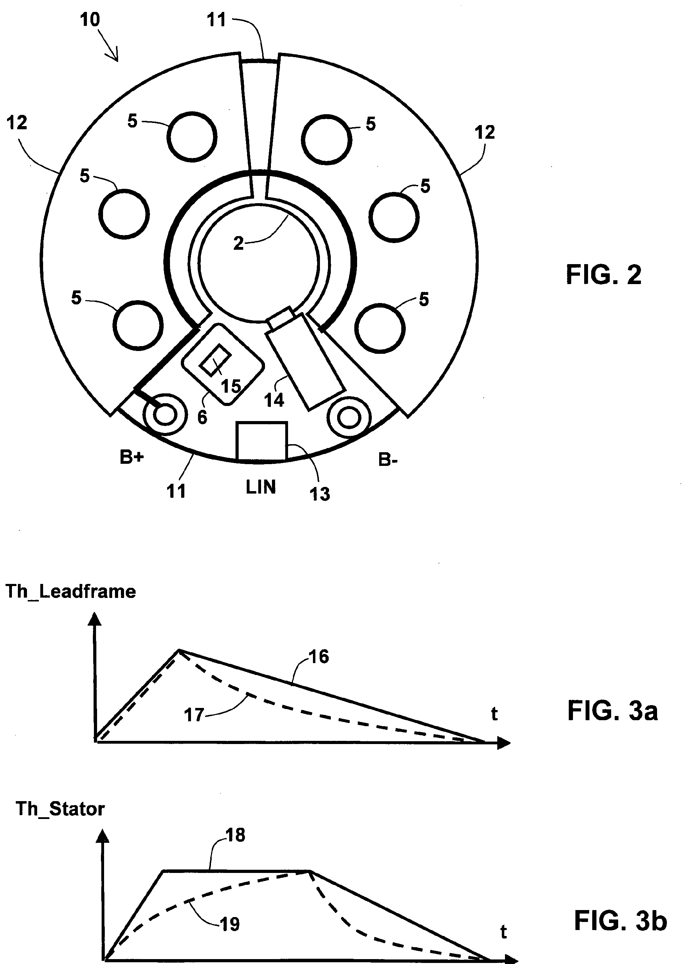

La **Figure 2** est une vue axiale simplifiée, du côté opposé à la poulie d'entraînement, d'un alterno-démarreur 10 mis en oeuvre dans le système de démarrage/ arrêt automatique selon l'invention montrant les premiers éléments de commutation à semi-conducteur 5 du module électronique de puissance 3.

Les transistors MOS 5 sont connectés entre eux par une grille de connexion 12 (« Lead frame » en anglais) et l'ensemble est monté sur un radiateur 11.

La grille de connexion supporte également les bornes électriques B+, B- de liaison au réseau électrique de bord, le connecteur 13 du réseau local d'interconnexion LIN, le porte-balais 14, et le module de commande 6.

Le module de commande 6 comprend un capteur de température 15. Ce capteur de température 15 est monté sur un dissipateur du module de commande 6 et permet la mesure de sa température réelle TChip.

A la différence des solutions connues de l'état de la technique, l'intégration de ce capteur de température 15 au niveau du module de commande 6 modifie peu les étapes de production du système de démarrage/ arrêt automatique existant, donc ne grève pas les coûts, tout en permettant des estimations fiables des températures Th_Leadframe, Th_Stator de l'alterno-démarreur, comme il sera maintenant expliqué en liaison avec les **Figures 3a, 3b, 4 et 5.**

Selon l'invention, il est conçu un estimateur en fonction des informations déjà disponibles dans le système de démarrage/ arrêt automatique existant, et de la mesure de température réelle TChip du module de commande 6 facilement réalisable.

Un estimateur précis étant très coûteux en taille mémoire et en temps de calcul, on privilégie un estimateur « pire cas » en fixant certaines variables (comme le courant débité, le débit d'air, l'impédance de la batterie...) à des valeurs entraînant un maximum de variation de la première température courante du module de puissance 1, 3 et de la seconde température courante du stator 4.

La **Figure 3a** montre un exemple d'évolution 16 dans le temps de la première estimation de la première température courante Th_Leadframe de la grille de connexion 12 obtenue avec un estimateur « pire cas ». La courbe 17 représentant l'évolution réelle de température est toujours située en dessous.

Il en est de même pour l'évolution 18 dans le temps de la seconde estimation de la seconde température courante Th_Stator du stator 4, représentée sur la **Figure 3b,** qui enveloppe la courbe réelle 19.

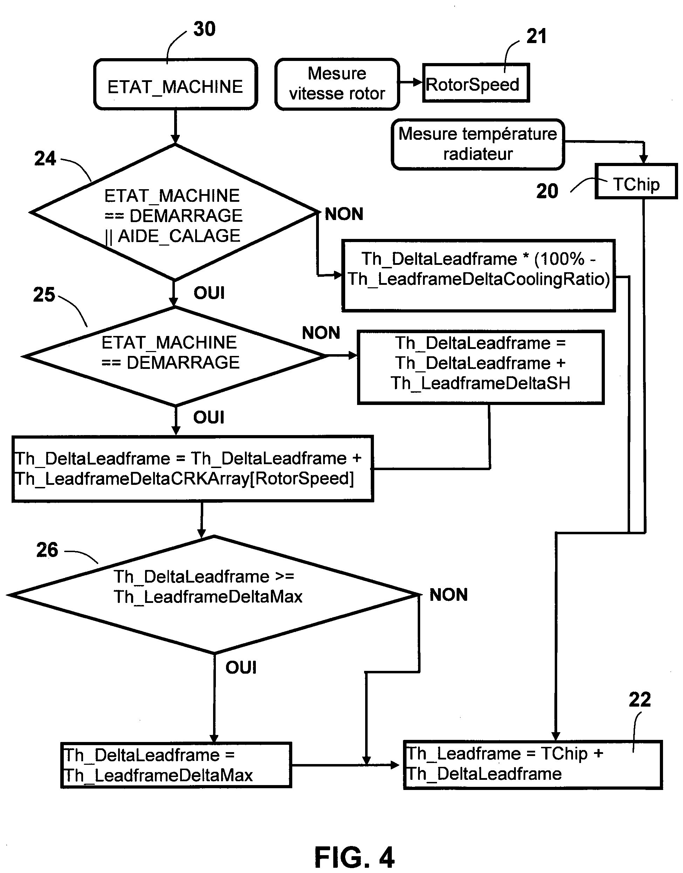

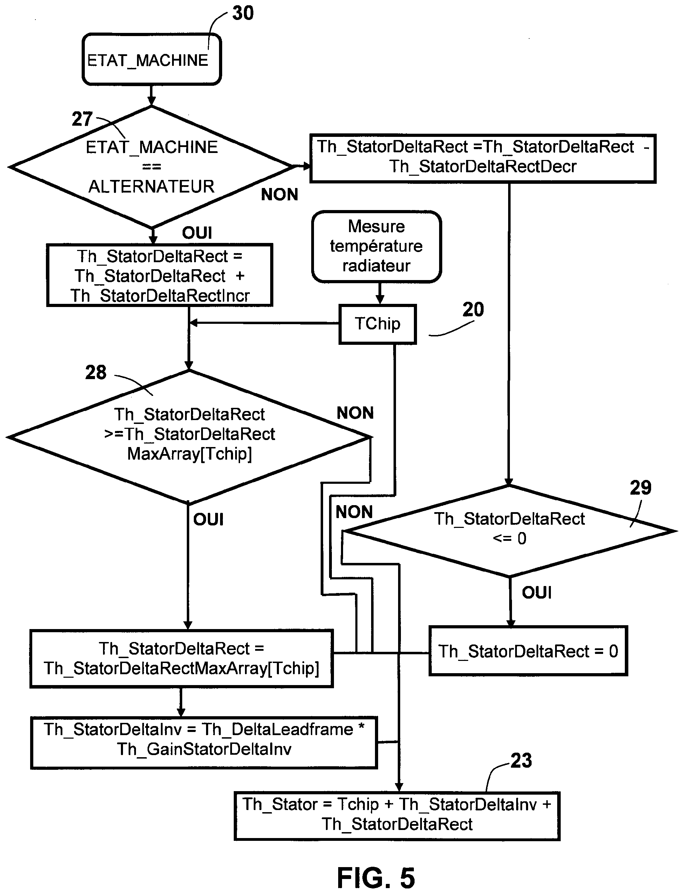

Les algorithmes représentés sur les **Figures 4 et 5** réalisent un compromis entre la précision de l'estimation, d'une part, et la taille mémoire requise par le calcul par le module de commande 6, d'autre part.

Les variables d'entrée 20, 21 des algorithmes exécutés périodiquement par le module de commande 6 sont la température réelle TChip du dissipateur du module de commande 6, et la vitesse de rotation RotorSpeed du rotor 2.

Un drapeau StopStartWarning (SSW) sera généré et transmis par le module de commande 6 à l'unité de contrôle électronique 8 pour inhiber le redémarrage et empêcher l'arrêt du moteur thermique quand l'une des variables de sorties 22, 23 des algorithmes, c'est-à-dire la première estimation de la première température courante Th_Leadframe ou la seconde estimation de la seconde température courante Th_Stator dépassera une première température prédéterminée Th_InverterMax ou une seconde température prédéterminée Th_StatorOverheating. De plus, une anticipation sous la forme d'un autre drapeau pourra être générée et transmise par le module de commande 6 à l'unité de contrôle électronique 8 pour une adaptation de la stratégie de démarrage / arrêt automatique en vue d'une inhibition proche de l'arrêt. La température Th_Stator peut également être transmise dans le cadre de la gestion de la stratégie de démarrage / arrêt automatique.

Toutes les informations nécessaires au calcul des algorithmes sont transmises par l'unité de commande 6 à l'unité de contrôle 8. Ces calculs peuvent donc également être implémentés dans l'unité de contrôle 8.

Les exécutions conditionnelles 24, 25, 26, 27, 28, 29 des différentes boucles d'itération des algorithmes dépendent de l'état de fonctionnement 30 de l'alterno-démarreur décrits dans la **Table I**, ou de l'atteinte de maxima 26, 28 ou minima 29.

**Table I**

| ETAT_MACHINE | Description |
|---|---|
| NEUTRE | Pas de fonction requise (pendant un le ralenti par exemple). |
| ANTICIPATION_DEMARR AGE | Le rotor 2 est magnétisé à 100% dans l'attente d'un démarrage imminent (Ordre filaire principalement) |
| PREFLUXAGE_RALENTI | Le rotor est magnétisé à 100% dans l'attente d'un démarrage imminent (Ordre LIN) |
| DEMARRAGE | Démarrage ou redémarrage |
| ALTERNATEUR | Alternateur |
| AIDE_CALAGE | Prélèvement de couple lors d'un arrêt pour un arrêt plus rapide du moteur thermique |

Les algorithmes sont basés sur des cartographies pour la statique, et des filtrages récursifs (ou des gradients) pour la dynamique.

Des exemples de valeurs préférées des paramètres sont donnés dans les **Tables II**, **III et IV** ci-après.

La **Figure 4** montre de manière détaillée le calcul de la première estimation Th_Leadframe de la première température de la grille de connexion 12 à partir de la température réelle TChip du dissipateur du module de commande 6 au moyen de premières constantes « pire cas ».

A chaque itération de l'algorithme, effectuée de préférence toutes les 10 ms, la première variable Th_Leadframe est calculée 22 en ajoutant à TChip une contribution Th_DeltaLeadframe représentant l'écart de température estimée entre le module de commande 6 et la grille de connexion 12 dans le pire des cas :

$$\text{Th\_Leadframe} = \text{Tchip} + \text{Th\_DeltaLeadframe}$$

Quand le module électronique de puissance 3 fonctionne en onduleur, c'est-à-dire dans les phases de démarrage DEMARRAGE et d'aide au calage AIDE_CALAGE 24, 25, la contribution Th_DeltaLeadframe est elle-même incrémentée d'une quantité Th_LeadframeDeltaCRKArray dépendant de la vitesse de rotation du rotor 2 (Voir **Table II**).

**Table II**

| RotorSpeed (rpm) | Th_LeadframeDeltaCRKArray (°C/s) |
|---|---|
| 100 | 5.8 |
| 200 | 4.4 |
| 400 | 3.6 |
| 600 | 2.6 |
| 1000 | 2.6 |

Dans la phase d'aide au calage AIDE_CALAGE 25, une autre contribution fixe Th_LeadframeDeltaSH (Voir **Table III**) accroît l'écart de température Th_DeltaLeadframe entre le module de commande 6 et la grille de connexion 12.

Quand l'alterno-démarreur 10 n'intervient ni au démarrage, ni à l'aide au calage 24, la contribution Th_DeltaLeadframe est diminuée par un facteur de refroidissement Th_LeadframeDelaCoolingRatio (Voir **Table III**).

**Table III**

| Paramètres | Description | Valeur |
|---|---|---|
| Th_InverterMax | Seuil de température pour la détection la surchauffe des MOSFETs 1, 3 | 153°C |
| Th_InverterMaxHyst | Seuil de température pour la restauration de la détection de la surchauffe des MOSFETs 1,3 | 150°C |
| Th_StatorOverheating | Seuil de température pour la détection la surchauffe du stator 4 | 250 °C |
| Th_StatorHysteresis | Seuil de température pour la restauration de la détection de la surchauffe du stator 4 | 220 °C |
| Th_GainStatorDeltaInv | Paramètre d'estimation de la température du stator 4 en mode onduleur | 1.2 |
| Th_StatorDeltaRectIncr | Paramètre d'estimation de l'augmentation de la température du stator 4 en mode redresseur | 0,2 °C/s |
| Th_StatorDeltaRectDecr | Paramètre d'estimation de la diminution de la température du stator 4 en mode redresseur | 0,1 °C/s |
| Th_StatorDeltaRectMaxArray | Ecart maximum de température entre le stator 4 et le module de commande 6 en fonction de la température de ce module 6 | Table IV |
| Th_LeadframeDeltaMax | Ecart maximum de température entre le module de puissance 1,3 et le module de commande 6 | 255°C |
| Th_LeadframeDeltaCoolingRatio | Paramètre de diminution de la température du module de puissance 1,3 | 1%/s |
| Th_LeadframeDeltaSH | Paramètre d'estimation de la température du module de puissance 1,3 en mode aide au calage | 3,4°C/s |

(suite)

| Paramètres | Description | Valeur |
|---|---|---|
| Th_LeadframeDeltaCRKArray | Estimation de l'augmentation de température de l'électronique de puissance 1,3 pendant le démarrage en fonction de la vitesse de rotation du rotor 2 | Table III |

L'accroissement de la contribution Th_DeltaLeadframe cesse quand elle atteint la valeur maximale Th_LeadframeDeltaMax (Voir **Table III).**

La contribution thermique Th_DeltaLeadframe en mode onduleur dépend de la vitesse de rotation RotorSpeed du rotor 2, de l'état de la machine 30, et aussi en réalité de la température ambiante et de l'impédance de câblage et batterie. Mais ces paramètres sont indisponibles. On a donc choisi un algorithme **(Figure 4)** plus simple en considérant les paramètres manquant comme étant ceux qui provoquent toujours un maximum d'échauffement quelque soit les conditions.

De manière analogue au calcul de la première estimation de la première température Th_Leadframe, la **Figure 5** montre de manière détaillée le calcul de la seconde estimation Th_Stator de la seconde température du stator 4 à partir de la température réelle TChip du dissipateur du module de commande 6 au moyen de secondes constantes « pire cas ».

L'écart de température entre le module de commande 6 et le stator 4 comporte deux termes:

- la contribution « pire cas » Th_ StatorDeltaRect en mode alternateur ALTERNATEUR 27 ;
- La contribution thermique « pire cas » Th_StatorDeltaInv en mode onduleur (DEMARRAGE et AIDE_CALAGE).

La contribution thermique en mode onduleur est la même que pour la protection du module de puissance 3. L'algorithme peut donc uniquement dépendre de la vitesse de rotation du rotor 2 et de l'état de la machine 30.

Pour simplifier les calculs, un simple gain Th_GainStatorDeltaInv portant sur la contribution Th_DeltaLeadframe calculée par l'algorithme précédent **(Figure 4)** est utilisé pour calculer la contribution thermique « pire cas » Th_StatorDeltaInv. l'estimateur stator pour simplifier les calculs.

La contribution thermique en mode alternateur ALTERNATEUR 27 dépend de la vitesse de rotation RotorSpeed du rotor 2, de l'état de la machine 30, de la température ambiante, de la puissance fournie et de l'écoulement d'air. Certains de ces paramètres sont indisponibles. D'autres sont disponibles, mais utiliser une cartographie de 3 ou 4D serait trop coûteux en taille de mémoire. On choisit donc l'algorithme plus simple représenté sur la **Figure 5** en considérant les paramètres manquants comme étant ceux qui provoquent toujours un maximum d'échauffement quelles que soient les conditions. La vitesse de rotation du rotor 2 est ainsi fixée de préférence à 3000rpm, le débit toujours au maximum, le flux d'air nul.

Les variations de température peuvent être approximées par des gradients de température par seconde. Le refroidissement est conçu différemment pour le mode démarrage afin de privilégier la précision de l'estimateur et ainsi éviter qu'il diverge. La seconde estimation de la seconde température courante Th_Stator, effectuée de préférence toutes les 10 ms, en fonction de la température réelle TChip du module de commande 6 est donc:

$$\text{Th\_Stator} = \text{Tchip} + \text{Th\_StatorDeltaInv} + \text{Th\_StatorDeltaRect}$$

avec:

$$\text{Th\_StatorDeltaInv} = \text{Th\_DeltaLeadframe} * \text{Th\_GainStatorDeltaInv}$$

et

$$\text{Th\_StatorDeltaRect} = \text{Th\_StatorDeltaRect} + \text{Th\_StatorDeltaRectIncr}$$

si l'alterno-démarreur 10 est en mode alternateur ALTERNATEUR 27, ou sinon

$$\text{Th\_StatorDeltaRect} = \text{Th\_StatorDeltaRect} - \text{Th\_StatorDeltaRectDecr}$$

Les valeurs de Th_StatorDeltaRect sont toujours positives et bornées par des secondes constantes « pire cas » Th_StatorDeltaRectMaxArray dépendant de la température réelle TChip (Voir **TableIV).**

**Table IV**

| TChip (°C) | Th_StatorDeltaRectMaxArray (°C) |
|---|---|
| <70 | 100 |
| <100 | 87 |
| <130 | 73 |
| >=130°C | 60 |

Ainsi qu'il a déjà été indiqué, les critères de détection pour les protections thermiques sont les dépassements des limites thermiques fixées en démarrage :

Si **Th_Stator > Th_StatorOverheating** ou **Th_Leadframe > Th_InverterMax,** alors le drapeau **StopStartWarning** est mis**.**

Les tentatives de démarrage en cours ne sont pas arrêtées, mais les prochaines tentatives sont inhibées tant que les températures estimées ne sont pas redescendues sous les valeurs d'hystérésis Th_StatorHysteresis et Th_InverterMaxHyst (Voir **Table III**).

Comme il va de soi, l'invention ne se limite pas au seul mode d'exécution préférentiel décrit ci-dessus.

Notamment, les diagrammes représentant les calculs des première et seconde estimations des première et seconde températures courantes du module électronique de puissance et du stator pourront comporter des séquences de programme supplémentaires portant sur des paramètres représentatifs d'une modélisation plus complexe du système de démarrage/ arrêt automatique que celle donnée ci-dessus.

Des améliorations peuvent être apportées à la conception des algorithmes décrits, mais au détriment de la taille en mémoire ou du temps de calcul. Un algorithme exécuté dans l'unité de contrôle électronique 8 peut disposer de plus d'information (comme le débit d'air en fonction de la vitesse du véhicule et des ventilateurs, ou l'impédance de la batterie de bord), et les traiter, et donc être plus précis qu'un algorithme qui serait exécuté alternativement dans le module de commande 6.

Cette précision peut permettre une plus grande disponibilité de la fonction démarrage/ arrêt automatique si nécessaire suivant les stratégies (voire directement estimer le couple de démarrage de l'alterno-démarreur 10).

Par exemple, la contribution thermique en mode alternateur peut être calculée à l'aide d'une cartographie 4D (courant d'excitation, vitesse de rotation RotorSpeed du rotor 2, TChip, Vitesse du véhicule).

Les gradients thermiques peuvent aussi être remplacés par des filtrages du 1$^{er}$ ordre avec des constantes de temps fixes ou variables en fonction du débit d'air.

Toujours en fonction du besoin de précision, on pourra améliorer l'algorithme de protection **(Figure 5)** du stator 4 en rajoutant des variables supplémentaires comme le courant d'excitation du rotor 2 ou le flux d'air. On pourra également améliorer la précision en dynamique en mettant des filtrages plus précis, basés sur les variations d'impédance thermique de la machine.

L'invention embrasse donc au contraire toutes les variantes possibles de réalisation qui resteraient dans le cadre défini par les revendications ci-après.

**Revendications**

**1.** Procédé de contrôle de la fonction de redémarrage d'un système de démarrage / arrêt automatique d'un moteur thermique d'un véhicule au moyen d'un alterno-démarreur (10) comprenant un module électronique de puissance (1,3) et des moyens de commande (6, 8), lesdits moyens de commande incluant un module de commande (6) commandant ledit module électronique de puissance (1,3) et une unité de contrôle électronique (8), ledit module de commande (6) échangeant des informations représentatives d'un état de fonctionnement dudit véhicule provenant de capteurs (9,15) avec ladite unité de contrôle électronique (8), ledit procédé étant du type de ceux dans lesquels lesdits moyens de commande (6, 8) effectuent une première estimation d'une première température courante (Th_Leadframe) dudit module électronique de puissance (1,3) au moyen desdits capteurs (9,15) et déterminent

**EP 2 553 254 B1**

l'inhibition de ladite fonction de redémarrage quand ladite première estimation de ladite première température courante (Th_Leadframe) est supérieure à une première température prédéterminée (Th_InverterMax), et ledit procédé étant **caractérisé en ce que** lesdits moyens de commande (6, 8) effectuent ladite première estimation de ladite première température courante (Th_Leadframe) à partir au moins d'une mesure d'une température réelle (TChip) dudit module de commande et d'une valeur d'une vitesse de rotation (RotorSpeed) dudit alterno-démarreur (10) quand ledit alterno-démarreur fonctionne en démarreur, et **en ce que** lesdits moyens de commande (6, 8) déterminent de plus l'inhibition de ladite fonction de redémarrage quand une seconde température courante (Th_Stator) d'un stator (4) dudit alterno-démarreur (10) est supérieure à une seconde température prédéterminée (Th_StatorOverheating).

2. Procédé de contrôle de la fonction de redémarrage d'un système de démarrage/ arrêt automatique d'un moteur thermique d'un véhicule selon la revendication 1, **caractérisé en ce que** lesdits moyens de commande (6, 8) effectuent une seconde estimation de ladite seconde température courante (Th_Stator) à partir au moins de ladite mesure de ladite température réelle (TChip) dudit module de commande (6) quand ledit alterno-démarreur (10) fonctionne en alternateur.

3. Procédé de contrôle de la fonction de redémarrage d'un système de démarrage/ arrêt automatique d'un moteur thermique d'un véhicule selon la revendication 1 ou 2 précédente, **caractérisé en ce que** lesdits moyens de commande (6, 8) effectuent lesdites première et seconde estimations (Th_Leadframe, Th_Stator) à partir de plus d'au moins une table de paramètres représentatifs des caractéristiques thermiques dudit alterno-démarreur (10).

4. Procédé de contrôle de la fonction de redémarrage d'un système de démarrage/ arrêt automatique d'un moteur thermique d'un véhicule selon la revendication 3, **caractérisé en ce que** lesdits paramètres comprennent des constantes correspondant à des conditions d'un échauffement maximum.

5. Système de démarrage/ arrêt automatique d'un moteur thermique d'un véhicule mettant en oeuvre le procédé selon l'une quelconque des revendications 1 a 4 précédentes, **caractérisé en ce que** ledit module de commande (6) comprend des moyens pour estimer ladite première estimation de ladite première température courante (Th_Leadframe) à partir d'une mesure de température fournie par un capteur de température (15) compris dans ledit module de commande (6) et d'une valeur d'une vitesse de rotation (RotorSpeed) dudit alterno-démarreur (10) quand ledit alterno-démarreur fonctionne en démarreur, et des moyens de transmission de ladite mesure de ladite température réelle (TChip) à ladite unité de contrôle électronique (8), et **en ce que** ledit module de commande (6) est agencé sur une grille de connexion dudit module électronique de puissance (1,3) et **en ce que** ladite grille de connexion est solidaire dudit stator (4).

6. Système de démarrage/ arrêt automatique d'un moteur thermique d'un véhicule apte à la mise en oeuvre du procédé selon la revendication 3 ou 4 précédente, **caractérisé en ce que** lesdits moyens de commande (6, 8) comprennent au moins une mémoire électronique contenant lesdites tables de paramètres.

7. Mémoire électronique du système de démarrage/ arrêt automatique d'un moteur thermique d'un véhicule selon la revendication 5 ou 6 précédente contenant au moins un programme mettant en oeuvre à travers lesdits moyens de commande (6, 8) le procédé selon l'une quelconque des revendications 1 à 4 précédentes.

**Patentansprüche**

1. Verfahren zur Steuerung der Neustartfunktion eines automatischen Start-Stopp-Systems eines Verbrennungsmotors eines Fahrzeugs mittels eines Startergenerators (10), der ein elektronisches Leistungsmodul (1, 3) und Steuerungsmittel (6, 8) umfasst, wobei die Steuerungsmittel ein Steuermodul (6), welches das elektronische Leistungsmodul (1, 3) steuert, und eine elektronische Kontrolleinheit (8) beinhalten, wobei das Steuermodul (6) für einen Betriebszustand des Fahrzeugs repräsentative Informationen, die von Sensoren (9, 15) stammen, mit der elektronischen Kontrolleinheit (8) austauscht, wobei das Verfahren vom Typ derjenigen ist, bei denen die Steuerungsmittel (6, 8) eine erste Schätzung einer ersten aktuellen Temperatur (Th_Leadframe) des elektronischen Leistungsmoduls (1, 3) mittels der Sensoren (9, 15) durchführen und die Blockierung der Neustartfunktion bestimmen, wenn die erste Schätzung der ersten aktuellen Temperatur (Th_Leadframe) größer als eine erste vorbestimmte Temperatur (Th_InverterMax) ist, und wobei das Verfahren **dadurch gekennzeichnet ist, dass** die Steuerungsmittel (6, 8) die erste Schätzung der ersten aktuellen Temperatur (Th_Leadframe) basierend wenigstens auf einer Messung einer Isttemperatur (TChip) des Steuermoduls und einem Wert einer Drehzahl (RotorSpeed) des Startergenerators (10),

9

wenn der Startergenerator als Starter arbeitet, durchführen, und dadurch, dass die Steuerungsmittel (6, 8) außerdem die Blockierung der Neustartfunktion bestimmen, wenn eine zweite aktuelle Temperatur (Th_Stator) eines Stators (4) des Startergenerators (10) größer als eine zweite vorbestimmte Temperatur (Th_StatorOverheating) ist.

2. Verfahren zur Steuerung der Neustartfunktion eines automatischen Start-Stopp-Systems eines Verbrennungsmotors eines Fahrzeugs nach Anspruch 1, **dadurch gekennzeichnet, dass** die Steuerungsmittel (6, 8) eine zweite Schätzung der zweiten aktuellen Temperatur (Th_Stator) basierend auf wenigstens der Messung einer Isttemperatur (TChip) des Steuermoduls (6), wenn der Startergenerator (10) als Generator arbeitet, durchführen.

3. Verfahren zur Steuerung der Neustartfunktion eines automatischen Start-Stopp-Systems eines Verbrennungsmotors eines Fahrzeugs nach dem vorhergehenden Anspruch 1 oder 2, **dadurch gekennzeichnet, dass** die Steuerungsmittel (6, 8) die erste und die zweite Schätzung (Th_Leadframe, Th_Stator) basierend auf außerdem wenigstens einer Tabelle von Parametern, die für die thermischen Eigenschaften des Startergenerators (10) repräsentativ sind, durchführen.

4. Verfahren zur Steuerung der Neustartfunktion eines automatischen Start-Stopp-Systems eines Verbrennungsmotors eines Fahrzeugs nach Anspruch 3, **dadurch gekennzeichnet, dass** die Parameter Konstanten umfassen, welche Bedingungen einer maximalen Erwärmung entsprechen.

5. Automatisches Start-Stopp-System eines Verbrennungsmotors eines Fahrzeugs, welches das Verfahren nach einem der vorhergehenden Ansprüche 1 bis 4 implementiert, **dadurch gekennzeichnet, dass** das Steuermodul (6) Mittel zum Schätzen der ersten Schätzung der ersten aktuellen Temperatur (Th_Leadframe) basierend auf einem Temperaturmesswert, der von einem in dem Steuermodul (6) enthaltenen Temperatursensor (15) geliefert wird, und einem Wert einer Drehzahl (RotorSpeed) des Startergenerators (10), wenn der Startergenerator als Starter arbeitet, und Mittel zur Übertragung des Messwertes der Isttemperatur (TChip) zu der elektronischen Kontrolleinheit (8) umfasst, und dadurch, dass das Steuermodul (6) auf einem Leiterrahmen des elektronischen Leistungsmoduls (1, 3) angeordnet ist, und dadurch, dass der Leiterrahmen mit dem Stator (4) fest verbunden ist.

6. Automatisches Start-Stopp-System eines Verbrennungsmotors eines Fahrzeugs, das für die Implementierung des Verfahrens nach dem vorhergehenden Anspruch 3 oder 4 geeignet ist, **dadurch gekennzeichnet, dass** die Steuerungsmittel (6, 8) wenigstens einen elektronischen Speicher umfassen, der die Tabellen von Parametern enthält.

7. Elektronischer Speicher des automatischen Start-Stopp-Systems eines Verbrennungsmotors eines Fahrzeugs nach dem vorhergehenden Anspruch 5 oder 6, welcher wenigstens ein Programm enthält, das über die Steuerungsmittel (6, 8) das Verfahren nach einem der vorhergehenden Ansprüche 1 bis 4 implementiert.

## Claims

1. Method for controlling the restart function of an automatic start/stop system for a vehicle combustion engine by means of an alternator-starter (10) comprising a power electronic module (1, 3) and control means (6, 8), said control means including a control module (6) controlling said power electronic module (1, 3) and an electronic control unit (8), said control module (6) exchanging information representative of a state of operation of said vehicle originating from sensors (9, 15) with said electronic control unit (8), said method being of the type of those in which said control means (6, 8) perform a first estimation of a first current temperature (Th_Leadframe) of said power electronic module (1, 3) by means of said sensors (9, 15) and determine the inhibiting of said restart function when said first estimation of said first current temperature (Th_Leadframe) is above a first predetermined temperature (Th_InverterMax), and said method being **characterized in that** said control means (6, 8) perform said first estimation of said first current temperature (Th_Leadframe) from at least a measurement of a real temperature (TChip) of said control module and from a value of a rotation speed (RotorSpeed) of said alternator-starter (10) when said alternator-starter is operating in starter mode, and **in that** said control means (6, 8) also determine the inhibiting of said restart function when a second current temperature (Th_Stator) of a stator (4) of said alternator-starter (10) is above a second predetermined temperature (Th_StatorOverheating).

2. Method for controlling the restart function of an automatic start/stop system for a vehicle combustion engine according to Claim 1, **characterized in that** said control means (6, 8) perform a second estimation of said second current temperature (Th_Stator) from at least said measurement of said real temperature (TChip) of said control module (6) when said alternator-starter (10) is operating in alternator mode.

3. Method for controlling the restart function of an automatic start/stop system for a vehicle combustion engine according to the preceding Claim 1 or 2, **characterized in that** said control means (6, 8) perform said first and second estimations (Th_Leadframe, Th_Stator) from, in addition, at least one table of parameters representative of the thermal characteristics of said alternator-starter (10).

4. Method for controlling the restart function of an automatic start/stop system for a vehicle combustion engine according to Claim 3, **characterized in that** said parameters comprise constants corresponding to maximum heating conditions.

5. System for automatically starting/stopping a vehicle combustion engine implementing the method according to any one of the preceding Claims 1 to 4, **characterized in that** said control module (6) comprises means for estimating said first estimation of said first current temperature (Th_Leadframe) from a temperature measurement supplied by a temperature sensor (15) included in said control module (6) and from a value of a rotation speed (RotorSpeed) of said alternator-starter (10) when said alternator-starter is operating in starter mode, and means for transmitting said measurement of said real temperature (TChip) to said electronic control unit (8), and **in that** said control module (6) is arranged on a connection grid of said power electronic module (1, 3) and **in that** said connection grid is secured to said stator (4).

6. System for automatically starting/stopping a vehicle combustion engine capable of implementing the method according to the preceding Claim 3 or 4, **characterized in that** said control means (6, 8) comprise at least one electronic memory containing said tables of parameters.

7. Electronic memory of the system for automatically starting/stopping a vehicle combustion engine according to the preceding Claim 5 or 6, containing at least one programme implementing through said control means (6, 8), the method according to any one of the preceding Claims 1 to 4.

**FIG. 1**

EP 2 553 254 B1

FIG. 2

Th_Leadframe

FIG. 3a

Th_Stator

FIG. 3b

**FIG. 4**

EP 2 553 254 B1

**30**

ETAT_MACHINE

**27**

ETAT_MACHINE
==
ALTERNATEUR

**NON** → Th_StatorDeltaRect =Th_StatorDeltaRect -
Th_StatorDeltaRectDecr

**OUI**

Th_StatorDeltaRect =
Th_StatorDeltaRect +
Th_StatorDeltaRectIncr

Mesure
température
radiateur

TChip

**20**

**28**

Th_StatorDeltaRect
>=Th_StatorDeltaRect
MaxArray[Tchip]

**NON**

**OUI**

**NON**

**29**

Th_StatorDeltaRect
<= 0

**OUI**

Th_StatorDeltaRect =
Th_StatorDeltaRectMaxArray[Tchip]

Th_StatorDeltaRect = 0

Th_StatorDeltaInv = Th_DeltaLeadframe *
Th_GainStatorDeltaInv

**23**

Th_Stator = Tchip + Th_StatorDeltaInv +
Th_StatorDeltaRect

## FIG. 5

15

## RÉFÉRENCES CITÉES DANS LA DESCRIPTION

**Documents brevets cités dans la description**

- FR 2875549
- FR 2875551
- GB 2120877 A
- EP 0572588 A
- DE 10347683